(19) Europäisches Patentamt
European Patent Office
Office européen des brevets

(11) EP 4 410 901 A1

(12) EUROPEAN PATENT APPLICATION
published in accordance with Art. 153(4) EPC

(43) Date of publication:
**07.08.2024 Bulletin 2024/32**

(21) Application number: **22876202.7**

(22) Date of filing: **27.09.2022**

(51) International Patent Classification (IPC):
***C08L 101/10*** *(2006.01)* ***C08F 8/42*** *(2006.01)*
***C08G 65/336*** *(2006.01)* ***C09J 11/06*** *(2006.01)*
***C09J 123/26*** *(2006.01)*

(52) Cooperative Patent Classification (CPC):
**C08F 8/42; C08G 65/336; C08L 101/10; C09J 11/06; C09J 123/26**

(86) International application number:
**PCT/JP2022/035885**

(87) International publication number:
**WO 2023/054336 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2021 JP 2021163002**

(71) Applicant: **Toyobo Co., Ltd.**
**Kita-ku**
**Osaka-shi, Osaka 530-0001 (JP)**

(72) Inventors:
- **YOSHINO, Kento**
  **Otsu-shi, Shiga 520-0292 (JP)**
- **SASAI, Tamayo**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

# (54) CURABLE RESIN COMPOSITION AND HOT MELT ADHESIVE

(57) The present invention provides a curable resin composition that has excellent storage stability, pot life properties, curability, and adhesive strength at room temperature and high temperature, as well as sufficient thermal creep resistance. Specifically, the present invention provides a curable resin composition comprising a silane-modified organic polymer, a curing catalyst, and an alcohol, in which a relative energy difference (RED) between the silane-modified organic polymer and the alcohol, represented by the following mathematical formula, is 1.0 to 3.0:

$$\text{Relative energy difference (RED)} = \frac{R_{a-b}}{R_0}$$

in which $R_0$ represents an interaction radius of the silane-modified organic polymer, and Ra-b represents a distance between the Hansen solubility parameter (HSP) values of the silane-modified organic polymer and the Hansen solubility parameter (HSP) values of the alcohol.

EP 4 410 901 A1

## Description

### Technical Field

The present invention relates to a curable resin composition and a hot-melt adhesive.

### Background Art

It is known for curable resin compositions containing silane-modified organic polymers that hydrolyzable silyl groups are hydrolyzed and converted into silanol groups by reaction with atmospheric moisture or water contained in adherends, and that these silanol groups undergo a dehydration condensation reaction to form a crosslinked structure to achieve curing.

Curable resin compositions are widely used as base polymers for sealants, adhesives, paints, and the like (see, for example, PTL 1, PTL 2, and PTL 3).

### Citation List

### Patent Literature

PTL 1: JP5851367B

PTL 2: JP4150220B

PTL 3: JP6152236B

### Summary of Invention

### Technical Problem

In order to accelerate the curing reaction after adhesion, curing catalysts such as amine catalysts, organometallic catalysts, and Lewis acid catalysts are added to the curable resin compositions disclosed in PTL 1 and PTL 2.

The addition of curing catalysts is advantageous in that the crosslinking reaction is accelerated to reduce the time to development of adhesive strength. However, the crosslinking reaction also proceeds in the molten state during coating, and the fluidity of the curable resin composition decreases. As a result, there was a problem in that the time during which the curable resin composition can be applied to an adherend and the adherend can be laminated with a sheet (usable time or pot life) is significantly shortened.

To address the above problem, PTL 3 has reported that an alcohol that is solid at room temperature is added to a polyolefin containing a hydrolyzable silyl group, whereby the crosslinking reaction of the hydrolyzable silyl group in the molten state can be suppressed, improving the pot life.

However, in the curable resin composition of PTL 3, the amount of alcohol mixed is as relatively high as 1 to 40 parts by mass per 100 parts by mass of the polyolefin containing a hydrolyzable silyl group. In the reaction suppression mechanism of the invention disclosed in PTL 3, the alcohol liquefied by heating is compatible with or dispersed in the polyolefin to suppress the crosslinking reaction. For this reason, when the curable resin composition was stored at room temperature, the reaction suppression effect was difficult to exert because the alcohol was solid. Therefore, the curable resin composition of PTL 3 had a problem with low long-term storage stability.

Further, when the compatibility between the alcohol and the polyolefin containing a hydrolyzable silyl group was low, due to phase separation occurring during melting, not only was it not effective to suppress the crosslinking reaction, but also there was a problem that the alcohol bled out from the curable resin composition during cooling and solidification.

The present invention was made in view of the above, and an object thereof is to provide a curable resin composition having excellent storage stability, pot life properties, curability, and adhesive strength at room temperature and high temperature, as well as sufficient thermal creep resistance.

### Solution to Problem

As a result of intensive research to achieve the above object, the present inventors succeeded in the development of a curable resin composition having specific physical property values, and found that the object can be achieved by using the curable resin composition. The present invention has been completed upon further research.

Specifically, the present invention provides inventions of the following aspects.

Item 1. A curable resin composition comprising a silane-modified organic polymer, a curing catalyst, and an alcohol,

wherein a relative energy difference (RED) between the silane-modified organic polymer and the alcohol, represented by the following mathematical formula, is 1.0 to 3.0:

$$\text{Relative energy difference (RED)} = \frac{R_{a-b}}{R_0}$$

wherein $R_0$ represents an interaction radius of the silane-modified organic polymer, and Ra-b represents a distance between the Hansen solubility parameter (HSP) values of the silane-modified organic polymer and the Hansen solubility parameter (HSP) values of the alcohol.

Item 2. The curable resin composition according to Item 1, wherein the alcohol is contained in an amount of 10 to 5000 mass ppm based on the mass of the silane-modified organic polymer.
Item 3. The curable resin composition according to Item 1 or 2, wherein the alcohol is at least one member selected from the group consisting of ethanol, t-butyl alcohol, 3,3-dimethyl-1,2-butanediol, 1-undecanol, 2-phenyl-2-propanol, and 2,2-dimethyl-1,3-propanediol.
Item 4. The curable resin composition according to any one of Items 1 to 3, wherein the silane-modified organic polymer is a silane-modified polyolefin-based polymer and/or a silane-modified polyoxyalkylene-based polymer.
Item 5. The curable resin composition according to any one of Items 1 to 4, wherein the silane-modified organic polymer is a silane-modified polyolefin-based polymer.
Item 6. The curable resin composition according to any one of Items 1 to 5, wherein the alcohol is contained in an amount of 15 to 1000 mass ppm based on the mass of the silane-modified organic polymer.
Item 7. The curable resin composition according to any one of Items 1 to 6, wherein the alcohol is contained in an amount of 20 to 300 mass ppm based on the mass of the silane-modified organic polymer.
Item 8. The curable resin composition according to any one of Items 1 to 7, wherein the alcohol is contained in an amount of 25 to 200 mass ppm based on the mass of the silane-modified organic polymer.
Item 9. The curable resin composition according to any one of Items 1 to 8, wherein the relative energy difference (RED) between the silane-modified organic polymer and the alcohol is 1.01 to 2.75.
Item 10. The curable resin composition according to any one of Items 1 to 9, wherein the relative energy difference (RED) between the silane-modified organic polymer and the alcohol is 1.02 to 2.5.
Item 11. The curable resin composition according to any one of Items 1 to 10, wherein the curing catalyst is contained in an amount of 0.0001 to 2.0 parts by mass per 100 parts by mass of the silane-modified organic polymer.
Item 12. A hot-melt adhesive comprising the curable resin composition according to any one of Items 1 to 11.

Advantageous Effects of Invention

The curable resin composition of the present invention has excellent storage stability, pot life properties, curability, and adhesive strength at room temperature and high temperature, as well as sufficient thermal creep resistance.

Brief Description of Drawings

Fig. 1 shows an adhesive sample in an evaluation method of thermal creep resistance.
Fig. 2 shows the relationship between a measurement sample and a weight in the evaluation method of thermal creep resistance.

Description of Embodiments

Preferred embodiments of the present invention are described below in detail. The structural features may be

described below with reference to representative embodiments and specific examples. However, the present invention is not limited to such embodiments.

In the graduated numerical ranges described in the present specification, the upper or lower limit of the numerical range of one instance can be freely combined with the upper or lower limit of the numerical range of another instance. In the numerical ranges described herein, the upper or lower limit of the numerical ranges may be replaced with a value shown in the Examples or with a value that can be unambiguously derived from the Examples. In the present specification, numerical values connected by "to" mean a numerical range including the numerical values before and after "to" as the lower and upper limits.

In the present specification, the terms "comprising," "containing," and "including" include the concepts of comprising, containing, consisting essentially of, and consisting of.

In the present specification, "A and/or B" means "either A or B" or "both A and B." More specifically, "A and/or B" means "A," "B," or "A and B."

In the present specification, room temperature refers to a temperature within the range of 20°C to 25°C.

In the present specification, high temperature refers to a temperature within the range of 80°C to 200°C.

In the present specification, (meth)acrylic acid refers to acrylic acid and/or methacrylic acid.

In the present specification, the organic polymer refers to a compound having a structure with organic compound repeating units and including two or more repeating units.

In the present specification, "(co)polymer" means that both a homopolymer and a copolymer are included.

In the present specification, "n-" means "normal," "i-" means "iso," "sec-" means "secondary," and "tert-" or "t-" means "tertiary."

Curable Resin Composition

The curable resin composition of the present invention has the following configurations (i) and (ii):

(i) the curable resin composition comprises a silane-modified organic polymer, a curing catalyst, and an alcohol; and
(ii) the relative energy difference (RED) between the silane-modified organic polymer and the alcohol, represented by the following mathematical formula, is 1.0 to 3.0:

$$\text{Relative energy difference (RED)} = \frac{R_{a-b}}{R_0}$$

wherein $R_0$ represents an interaction radius of the silane-modified organic polymer, and Ra-b represents a distance between the Hansen solubility parameter (HSP) values of the silane-modified organic polymer and the Hansen solubility parameter (HSP) values of the alcohol.

Due to the above configurations (i) and (ii), the curable resin composition of the present invention has excellent storage stability, pot life properties, curability, and adhesive strength at room temperature and high temperature, as well as sufficient thermal creep resistance.

The present invention is a curable resin composition for hot-melt adhesives.

Hereinafter, the curable resin composition of the present invention is also simply referred to as "the present invention" or "the curable resin composition."

The present invention comprises a silane-modified organic polymer as an essential component.

Hydrolyzable Silyl Group

In the present invention, the silane-modified organic polymer has at least 1 or more (preferably 2 or more) crosslinkable hydrolyzable silyl groups. Examples of such hydrolyzable silyl groups include $-Si(OR^1)_nR^2_{3-n}$, wherein $R^1$ and $R^2$ are the same or different and are each a $C_{1-5}$ alkyl group or a $C_{6-20}$ aryl group, and n is an integer of 1 to 3. The $C_{1-5}$ alkyl group refers to a $C_{1-5}$ linear or branched alkyl group, and examples include methyl, ethyl, n-propyl, isopropyl, n-butyl, isobutyl, sec-butyl, tert-butyl, n-pentyl, isopentyl, and neopentyl groups. Examples of the $C_{6-20}$ aryl group include phenyl, naphthyl, indenyl, and anthryl groups. The hydrolyzable silyl group is preferably an alkoxysilyl group. Examples of alkoxysilyl groups include monoalkoxysilyl, dialkoxysilyl, and trialkoxysilyl groups. Examples of monoalkoxysilyl groups include dimethylmethoxysilyl and dimethylethoxysilyl groups. Examples of dialkoxysilyl groups include dimethoxysilyl, diethoxysilyl, methyldimethoxysilyl, and methyldiethoxysilyl groups. Examples of trialkoxysilyl groups include trimethoxysilyl, triethoxysilyl, triisopropoxysilyl, and triphenoxysilyl groups.

First, the organic polymer that is used as a raw material for producing the silane-modified organic polymer is explained.

Organic Polymer

In the present invention, the organic polymer has at least 1 or more (preferably 2 or more) crosslinkable hydrolyzable silyl groups. The hydrolyzable silyl group may be located at the end of the main chain skeleton or the side chain of the organic polymer, or at both the end of the main chain skeleton and the side chain of the organic polymer. The details of the hydrolyzable silyl group are as described in "Hydrolyzable Silyl Group" above, unless otherwise specified. Examples of the polymer that forms the main chain skeleton of the organic polymer having a hydrolyzable silyl group include polyolefin-based polymers; hydrocarbon-based polymers, such as hydrogenated polyolefin-based polymers obtained by hydrogenating such polyolefin-based polymers; polyoxyalkylene-based polymers; polyester-based polymers; vinyl-based polymers; (meth)acrylic acid ester-based polymers; graft polymers obtained by further graft-polymerization of vinyl-based monomers to these organic polymers; polysulfide-based polymers; polyamide-based polymers; polycarbonate-based polymers; and diallyl phthalate-based polymers. These polymers that form the main chain skeleton may be contained in the organic polymer having a hydrolyzable silyl group singly or two or more in a block or at random. Preferred among these polymers that form the main chain skeleton are a polyolefin-based polymer and a polyoxyalkylene-based polymer, which are easy to obtain and produce.

Examples of polyolefin-based polymers include α-olefin homopolymers polymerized from monomer components, such as ethylene, propylene, 1-butene, isobutene, 4-methyl-1-pentene, 1-hexene, 1-octene, 1-decene, 1-dodecene, 1-tetradecene, 1-hexadecene, 1-octadecene, and 1-eicosene; copolymers of ethylene and α-olefins other than ethylene, such as an ethylene-propylene copolymer, an ethylene-propylene-butylene copolymer, and an ethylene-propylene-isobutylene copolymer; copolymers of α-olefins and other monomers copolymerizable with α-olefins (e.g., conjugated or unconjugated dienes, such as butadiene, 1,4-hexadiene, 7-methyl-1,6-octadiene, 1,8-nonadiene, and 1,9-decadiene; and cyclic olefins, such as cyclopropene, cyclobutene, cyclopentene, cyclohexene, norbornene, and dicyclopentadiene); copolymers of isobutylene and isoprene; polychloroprene; polyisoprene; copolymers of isoprene or butadiene and acrylonitrile and/or styrene; and polybutadiene. In the present invention, preferred among these polyolefin-based polymers are a propylene homopolymer, an ethylene-propylene copolymer, an ethylene-propylene-butylene copolymer, and an ethylene-propylene-isobutylene copolymer; and more preferred is a propylene homopolymer.

Examples of polyoxyalkylene-based polymers include polyoxyethylene, polyoxypropylene, polyoxybutylene, polyoxytetramethylene, a polyoxyethylene-polyoxypropylene copolymer, and a polyoxypropylene-polyoxybutylene copolymer. In the present invention, preferred among these polyoxyalkylene-based polymers is a polyoxypropylene-polyoxybutylene copolymer.

Examples of polyester-based polymers include polymers having an ester bond (polymers obtained by condensation of dibasic acids, such as adipic acid, with glycol, polymers obtained by ring-opening polymerization of lactone, etc.).

Examples of vinyl-based polymers include polymers obtained by radical polymerization of vinyl-based monomers, such as vinyl acetate, acrylonitrile, and styrene.

Examples of (meth)acrylic acid ester-based polymers include polymers obtained by radical polymerization of (meth)acrylic acid ester monomers, such as methyl (meth)acrylate, ethyl (meth)acrylate, butyl (meth)acrylate, 2-ethylhexyl (meth)acrylate, and stearyl (meth)acrylate.

Examples of graft polymers include polymers obtained by graft polymerization of vinyl-based monomers to the above various polymers. Examples of such vinyl-based monomers include vinyl acetate, acrylonitrile, styrene, and the like mentioned above.

Examples of polysulfide-based polymers include polymers with main chain bonds formed by polysulfide bonds and a mercapto group at the end.

Examples of polyamide-based polymers include nylon 6 obtained by ring-opening polymerization of ε-caprolactam; nylon 6,6 obtained by condensation polymerization of hexamethylene diamine and adipic acid; nylon 6,10 obtained by condensation polymerization of hexamethylene diamine and sebacic acid; nylon 11 obtained by condensation polymerization of ε-aminoundecanoic acid; nylon 12 obtained by ring-opening polymerization of ε-aminolaurolactam; and copolymer nylons with two or more components of the above nylons.

Examples of polycarbonate-based polymers include polymers obtained by condensation polymerization of bisphenol A and carbonyl chloride.

Examples of diallyl phthalate-based polymers include polymers composed mainly of diallyl orthophthalate, diallyl isophthalate, diallyl terephthalate, or the like.

Polyolefin-based Polymer

Specific examples of polyolefin-based polymers are as described above. In the present invention, the polyolefin-based polymer is preferably an amorphous or low-crystalline polyolefin-based polymer. The amorphous or low-crystalline polyolefin-based polymer is preferably a propylene homopolymer, an ethylene-propylene copolymer, an ethylene-propylene-butylene copolymer, or an ethylene-propylene-isobutylene copolymer. In the present invention, the polyolefin-based polymer is more preferably a propylene homopolymer.

In the present specification, the amorphous or low-crystalline polyolefin-based polymer refers to a polymer with a crystallization energy (J/g) of 50 J/g or less as measured by differential scanning calorimetry. The crystallization energy refers to the endothermic value determined by heating a sample from 20°C to 230°C with a differential scanning calorimeter, then cooling the sample to -100°C, and further reheating the sample to 230°C at a rate of 10°C/min.

In the present invention, the number average molecular weight of the polyolefin-based polymer is preferably 2000 to 80000, and more preferably 4000 to 70000. When the number average molecular weight of the polyolefin-based polymer is 2000 or more, the thermal creep resistance after curing and adhesive strength after curing of a curable resin composition and a hot-melt adhesive using the curable resin composition are further improved. When the number average molecular weight of the polyolefin-based polymer is 80000 or less, a curable resin composition and a hot-melt adhesive using the curable resin composition can be more easily applied to adherends. In the present specification, the number average molecular weight of the polyolefin-based polymer refers to a polystyrene-equivalent value measured by gel permeation chromatography (GPC, according to DIN 55 672).

The melt viscosity at 190°C of the polyolefin-based polymer is preferably 200 to 60000 mPa-s, more preferably 400 to 50000 mPa·s, and particularly preferably 600 to 40000 mPa·s. When the melt viscosity at 190°C of the polyolefin-based polymer is 200 mPa·s or more, the thermal creep resistance after curing and adhesive strength after curing of a curable resin composition and a hot-melt adhesive using the curable resin composition are further improved. When the melt viscosity at 190°C of the polyolefin-based polymer is 60000 mPa-s or less, a curable resin composition and a hot-melt adhesive using the curable resin composition can be more easily applied to adherends. In the present specification, the melt viscosity at 190°C of the polyolefin-based polymer refers to a value measured in accordance with the testing methods for melt viscosity of hot-melt adhesives prescribed in JIS K 6862.

The softening point of the polyolefin-based polymer is preferably 70 to 180°C, more preferably 80 to 170°C, and particularly preferably 90 to 160°C. When the softening point of the polyolefin-based polymer is 70°C or more, the curing reactions of a curable resin composition and a hot-melt adhesive using the curable resin composition after cooling and solidification can be further promoted. When the softening point of the polyolefin-based polymer is 180°C or less, a curable resin composition and a hot-melt adhesive using the curable resin composition can be more easily applied to adherends. In the present specification, the softening point of the polyolefin-based polymer refers to a value measured in accordance with the testing methods for the softening point of hot-melt adhesives prescribed in JIS K 6863.

The method for producing a polyolefin-based polymer is not particularly limited, and any of a wide range of known methods can be used. Examples include a solution polymerization method, a slurry polymerization method, and a gas-phase polymerization method. The conditions for each polymerization reaction can be appropriately set depending on the state (homogeneous or heterogeneous (supported form)) of the catalyst containing the zirconium compound etc. used, the production method (solution polymerization method, slurry polymerization method, or gas-phase polymerization method), the characteristics of the target polymer, or the form of the polymer. A solution polymerization method is described, for example, in JPS53-134889A and JP5064662B. In the Examples provided later, a polyolefin-based polymer was produced based on a solution polymerization method.

In the case of a solution polymerization method or slurry polymerization method, an organic solvent or olefin itself can be used as a medium. Usable examples of the organic solvent used in the solution polymerization method or slurry polymerization method include aliphatic hydrocarbons, such as propane, butane, isobutane, pentane, hexane, heptane, octane, decane, and dodecane; alicyclic hydrocarbons, such as cyclopentane, methylcyclopentane, and cyclohexane; aromatic hydrocarbons, such as benzene, toluene, and xylene; halogenated hydrocarbons, such as dichloromethane, chloroethane, 1,2-dichloroethane, and chlorobenzene. These organic solvents can be used alone or in a combination of two or more. Preferred among these organic solvents are aliphatic hydrocarbon, such as propane, butane, isobutane, pentane, hexane, heptane, octane, decane, and dodecane; and more preferred is heptane.

Further, together with the above catalyst, an impurity remover for increasing the productivity of polyolefin can be added into the polymerization reaction system. Examples of such an impurity remover include triethyl aluminum. In the polymerization of polyolefin, the amount of the catalyst is not particularly limited; however, the central metal concentration of the catalyst in the reaction system used for polymerization is preferably $10^{-8}$ to 10 mol/L, and more preferably $10^{-7}$ to $10^{-2}$ mol/L.

The polymerization temperature in the polymerization of olefin can be appropriately selected depending on reactants, reaction conditions, and the like. For example, in the case of a solution polymerization method, the polymerization temperature is preferably 0 to 250°C, and more preferably 10 to 200°C. In the case of a slurry polymerization

method or gas-phase polymerization method, the polymerization temperature is preferably 0 to 120°C, and more preferably 20 to 110°C.

The polymerization pressure in the method for producing a polyolefin-based polymer is preferably normal pressure to 20 MPa, and more preferably normal pressure to 10 MPa. The polymerization of the polyolefin may be performed in a batch, semi-continuous, or continuous mode. The molecular weight and molecular weight distribution of the final polymer produced according to the above polymerization method can be adjusted, for example, by a method of adjusting the polymerization temperature or injecting hydrogen into the reactor.

In the present invention, the polyolefin-based polymer is preferably produced by polymerizing a single or two or more olefin monomers in the presence of a metallocene catalyst using a solution polymerization method. An activator and/or scavenger (capture agent) may be added in performing polymerization. The olefin monomers suitably used include $\alpha$-olefins, such as ethylene, propylene, 1-butene, isobutene, 4-methyl-1-pentene, 1-hexene, 1-octene, 1-decene, 1-dodecene, 1-tetradecene, 1-hexadecene, 1-octadecene, and 1-eicosene; conjugated or unconjugated dienes, such as butadiene, 1,4-hexadiene, 7-methyl-1,6-octadiene, 1,8-nonadiene, and 1,9-decadiene; and cyclic olefins, such as cyclopropene, cyclobutene, cyclopentene, cyclohexene, norbornene, and dicyclopentadiene.

Examples of metallocene catalysts include bis(cyclopentadienyl)zirconium dichloride, bis(methylcyclopentadienyl) zirconium dichloride, bis(ethylcyclopentadienyl) zirconium dichloride, bis(iso-propylcyclopentadienyl) zirconium dichloride, bis(n-propylcyclopentadienyl)zirconium dichloride, bis(n-butylcyclopentadienyl)zirconium dichloride, bis(t-butylcyclopentadienyl)zirconium dichloride, bis(texilcyclopentadienyl) zirconium dichloride, bis(trimethylsilylcyclopentadienyl)zirconium dichloride, bis(trimethylsilylmethylcyclopentadienyl)zirconium dichloride, bis(cyclopentadienyl)zirconium chlorohydride, bis(cyclopentadienyl) methyl zirconium chloride, bis(cyclopentadienyl) ethyl zirconium chloride, bis(cyclopentadienyl) methoxy zirconium chloride, bis(cyclopentadienyl) phenyl zirconium chloride, bis(cyclopentadienyl) dimethyl zirconium, bis(cyclopentadienyl) diphenyl zirconium, bis(cyclopentadienyl) dineopentyl zirconium, bis(cyclopentadienyl) dihydrozirconium, bis(cyclopentadienyl) dimethoxyzirconium, bis(cyclopentadienyl)zirconium dichloride, trichloro(indenyl) titanium(IV), trichloro(cyclopentadienyl) titanium(IV), bis(cyclopentadienyl) zirconium chloride hydride, hafnocene dichloride, bis(butylcyclopentadienyl) zirconium(IV) dichloride, bis(propylcyclopentadienyl) hafnium(IV) dichloride, trichloro(pentamethylcyclopentadienyl) titanium(IV), $\mu$-chlorobis($\eta^5$-cyclopentadienyl) (dimethylaluminum) -$\mu$-methylene titanium, bis(pentamethylcyclopentadienyl) zirconium(IV) dichloride, bis(cyclopentadienyl) titanium dichloride, and bis(cyclopentadienyl) dimethyl titanium. Of these metallocene catalysts, bis (t-butylcyclopentadienyl) zirconium dichloride is preferred in the present invention. These metallocene catalysts may be used alone or in a combination of two or more.

Polyoxyalkylene-based Polymer

Specific examples of polyoxyalkylene-based polymers are as described above. In the present invention, the number average molecular weight of the polyoxyalkylene-based polymer is preferably 2000 to 80000, and more preferably 4000 to 60000. When the number average molecular weight of the polyoxyalkylene-based polymer is 2000 or more, the thermal creep resistance after curing and adhesive strength after curing of a curable resin composition and a hot-melt adhesive using the curable resin composition are further improved. When the number average molecular weight of the polyoxyalkylene-based polymer is 80000 or less, a curable resin composition and a hot-melt adhesive using the curable resin composition can be more easily applied to adherends. In the present specification, the number average molecular weight of polyoxyalkylene refers to a polystyrene-equivalent value measured by gel permeation chromatography (GPC, according to DIN 55 672).

The melt viscosity at 190°C of the polyoxyalkylene-based polymer is preferably 200 to 60000 mPa·s, more preferably 400 to 50000 mPa·s, and particularly preferably 600 to 40000 mPa·s. When the melt viscosity at 190°C of the polyoxyalkylene-based polymer is 200 mPa·s or more, the thermal creep resistance after curing and adhesive strength after curing of a curable resin composition and a hot-melt adhesive using the curable resin composition are further improved. When the melt viscosity at 190°C of the polyoxyalkylene-based polymer is 60000 mPa·s or less, a curable resin composition and a hot-melt adhesive using the curable resin composition can be more easily applied to adherends. In the present specification, the melt viscosity at 190°C of the polyoxyalkylene-based polymer refers to a value measured in accordance with the testing methods for melt viscosity of hot-melt adhesives prescribed in JIS K 6862.

In the present invention, the method for producing a polyoxyalkylene-based polymer is not particularly limited, and any of a wide range of known methods can be used. Examples include a polymerization method using an alkali catalyst, such as potassium hydroxide (KOH); a polymerization method using a transition metal compound-porphyrin complex catalyst, such as a complex obtained by the reaction of an organoaluminum compound with a porphyrin, as shown in JPS61-215623A; a polymerization method using a multimetal cyanide complex catalyst as shown in JPS46-27250B, JPS59-15336B, US3278457A, US3278458A, US3278459A, US3427256A, US3427334A, US3427335A, etc.; a polymerization method using a catalyst composed of a polyphosphazene salt as shown in JPH10-273512A; and a polymerization method using a catalyst composed of a phosphazene compound as shown in

JPH11-060722A, JP2017-171708A, etc.

In the present invention, the polyoxyalkylene-based polymer is preferably produced by a polymerization method using a catalyst composed of a phosphazene compound mentioned above. Examples of such phosphazene compounds include tetrakis(1,1,3,3-tetramethylguanidino)phosphazenium hydroxide, tetrakis(1,1,3,3-tetramethylguanidino)phosphazenium hydrogen carbonate, tetrakis[tris(dimethylamino)phosphoranylideneamino]phosphonium hydroxide, and 1-tert-butyl-4,4,4-tris(dimethylamino)-2,2-bis [tris(dimethylamino)phosphoranylideneamino] -2$\lambda^5$, 4$\lambda^5$-catenadi(phosphazene). Preferred among these phosphazene compounds is 1-tert-butyl-4,4,4-tris(dimethylamino)-2,2-bis [tris (dimethylamino) phosphoranylideneamino] -2$\lambda^5$,4$\lambda^5$-catenadi(phosphazene).

Silane-Modified Organic Polymer

In the present invention, the silane-modified organic polymer has at least 1 or more (preferably 2 or more) hydrolyzable silyl groups. The hydrolyzable silyl group may be located at the end of the main chain or the side chain of the silane-modified organic polymer, or at both the end of the main chain and the side chain. The details of the hydrolyzable silyl group are as described in "Hydrolyzable Silyl Group" above, unless otherwise specified. The hydrolyzable silyl groups form a crosslinked structure by a dehydration condensation reaction with a curing catalyst in the presence of moisture.

As the method for producing a silane-modified organic polymer, any of a wide range of known methods can be used, and examples include the following methods (i) to (iv):

(i) a method of obtaining a silane-modified organic polymer by hydrosilylation of an unsaturated group-containing organic polymer by action of a hydrosilane compound having a reactive silicon group;
(ii) a method of obtaining a silane-modified organic polymer by reacting an unsaturated group-containing organic polymer with a compound having a mercapto group and a reactive silicon group in the presence of a radical initiator or the like or by electron beam radiation;
(iii) a method of obtaining a silane-modified organic polymer by reacting an organic polymer having a functional group, such as a hydroxyl group, an epoxy group, or an isocyanate group, in the molecule with a compound having an isocyanate group and a reactive silicon group; and
(iv) a method of obtaining a silane-modified organic polymer by graft-polymerization of a silane-modified monomer having an ethylenically unsaturated group to an organic polymer in the presence of the organic polymer, the silane-modified monomer, and a radical initiator, or by electron beam radiation.

Among methods (i) to (iv) above, method (iv) is preferred. The method for producing a silane-modified polyoxyalkylene used in the Examples, provided later, corresponds to method (iii). Further, the method for producing a silane-modified polyolefin used in the Examples, provided later, corresponds to method (iv) in which a silane-modified organic polymer is obtained by graft-polymerization of a silane-modified monomer having an ethylenically unsaturated group to an organic polymer in the presence of the organic polymer, the silane-modified monomer, and a radical initiator.

In methods (i) and (ii) above, examples of the synthesis method of an unsaturated group-containing organic polymer include a method of obtaining an unsaturated group-containing organic polymer by reacting an organic polymer having a functional group, such as a hydroxyl group, in the molecule with a reactive organic compound having an active group and an unsaturated group; and a method of obtaining an unsaturated group-containing organic polymer by copolymerization of an organic polymer having a functional group, such as a hydroxyl group, in the molecule and an unsaturated group-containing epoxy compound.

In method (i) above, examples of the hydrosilane compound include halogenated silane compounds, such as trichlorosilane, methyldichlorosilane, dimethylchlorosilane, and phenyldichlorosilane; alkoxysilane compounds, such as trimethoxysilane, triethoxysilane, methyldiethoxysilane, methyldimethoxysilane, and phenyldimethoxysilane; acyloxysilane compounds, such as methyldiacetoxysilane and phenyldiacetoxysilane; and ketoxymatesilane compounds, such as bis(dimethylketoxymate)methylsilane and bis(cyclohexylketoxymate)methylsilane. Preferred among these are halogenated silane compounds and alkoxysilane compounds, which are easy to obtain and have high hydrolytic reactivity.

In method (ii) above, examples of the compound having a mercapto group and a reactive silicon group include $\gamma$-mercaptopropyltrimethoxysilane, $\gamma$-mercaptopropylmethyldimethoxysilane, $\gamma$-mercaptopropyltriethoxysilane, and $\gamma$-mercaptopropylmethyldiethoxysilane.

In methods (ii) and (iv) above, examples of the radical initiator include dicumyl peroxide, t-butyl peroxyisopropyl carbonate, di-t-butyl peroxide, t-butyl perbenzoate, benzoyl peroxide, cumene hydroperoxide, t-butyl peroctoate, methyl ethyl ketone peroxide, 2,5-dimethyl-2,5-di(t-butylperoxy)hexane, lauryl peroxide, t-butyl peracetate, t-butyl $\alpha$-cumyl peroxide, di-t-butyl peroxide, di-t-amyl peroxide, t-amyl peroxybenzoate, 1,1-bis(t-butylperoxy)-3,3,5-trimethylcyclohexane, $\alpha,\alpha'$-bis(t-butylperoxy)-1,3-diisopropylbenzene, $\alpha,\alpha'$-bis(t-butylperoxy)-1,4-diisopropylbenzene, 2,5-bis(t-butylperoxy)-2,5-dimethylhexane, and 2,5-bis(t-butylperoxy)-2,5-dimethyl-3-hexane. These radical initiators can be used alone or in

a combination of two or more. Preferred among these are dicumyl peroxide and t-butylperoxyisopropyl carbonate.

In method (iii) above, examples of the compound having an isocyanate group and a reactive silicon group include γ-isocyanatopropyltrimethoxysilane, γ-isocyanatopropylmethyldimethoxysilane, γ-isocyanatopropyltriethoxysilane (3-isocyanatopropyltriethoxysilane), and γ-isocyanatopropylmethyldiethoxysilane.

In method (iv) above, the silane-modified monomer having an ethylenically unsaturated group is represented, for example, by the following formula (1):

$$(X)_n(R)_{3-n}\text{-Si-Y} \quad .... \qquad \text{formula (1)}$$

wherein in formula (1), Y represents an ethylenically unsaturated group, X represents a hydrolyzable group, R represents an alkyl group, and n represents an integer of 1 to 3.

Examples of the hydrolyzable group in formula (1) above include halogen, alkoxy, alkenyloxy, acyloxy, amino, aminooxy, oxime, and amide groups. The alkoxy group is preferably a methoxy group. The number of hydrolyzable groups bonded to one silicon atom is selected from the range of 1, 2, and 3. A single hydrolyzable group or multiple hydrolyzable groups may be bonded to one silicon atom. Further, a hydrolyzable group and a non-hydrolyzable group may be bonded to one silicon atom. The hydrolyzable group bonded to a silicon group is preferably an alkoxy group (e.g., a monoalkoxy, dialkoxy, or trialkoxy group) in terms of ease of handling. In formula (1) above, n is preferably 3.

Examples of the ethylenically unsaturated group contained in the silane-modified monomer in method (iv) above include vinyl, aryl, acrylic, and methacrylic groups.

In method (iv) above, the silane-modified monomer having an ethylenically unsaturated group is preferably vinyltrimethoxysilane, vinyltriethoxysilane, phenyltrimethoxysilane, or 3-methacryloxypropyltrimethoxysilane.

In the present invention, the silane-modified organic polymer is preferably, in terms of reactivity and adhesion, a silane-modified polyolefin-based polymer and/or a silane-modified polyoxyalkylene-based polymer, and more preferably a silane-modified polyolefin-based polymer.

The silane-modified polyolefin-based polymer and the silane-modified polyoxyalkylene-based polymer are described below.

Silane-Modified Polyolefin-based Polymer

In the present invention, the melt viscosity at 190°C of the silane-modified polyolefin-based polymer is preferably 200 to 60000 mPa·s, more preferably 400 to 50000 mPa-s, and particularly preferably 600 to 40000 mPa·s. When the melt viscosity at 190°C of the silane-modified polyolefin-based polymer is 200 mPa·s or more, the thermal creep resistance after curing and adhesive strength after curing of a curable resin composition and a hot-melt adhesive using the curable resin composition are further improved. When the melt viscosity at 190°C of the silane-modified polyolefin-based polymer is 60000 mPa·s or less, a curable resin composition and a hot-melt adhesive using the curable resin composition can be more easily applied to adherends. In the present specification, the melt viscosity at 190°C of the silane-modified polyolefin-based polymer refers to a value measured in accordance with the testing methods for melt viscosity of hot-melt adhesives prescribed in JIS K 6862.

In the present invention, the number average molecular weight of the silane-modified polyolefin-based polymer is preferably 2000 to 80000, and more preferably 4000 to 70000. When the number average molecular weight of the silane-modified polyolefin-based polymer is 2000 or more, the thermal creep resistance after curing and adhesive strength after curing of a curable resin composition and a hot-melt adhesive using the curable resin composition are further improved. When the number average molecular weight of the silane-modified polyolefin-based polymer is 80000 or less, a curable resin composition and a hot-melt adhesive using the curable resin composition can be more easily applied to adherends. In the present specification, the number average molecular weight of the silane-modified polyolefin-based polymer refers to a polystyrene-equivalent value measured by gel permeation chromatography (GPC, according to DIN 55 672).

The softening point of the silane-modified polyolefin-based polymer is preferably 70 to 180°C, more preferably 80 to 170°C, and particularly preferably 90 to 160°C. When the softening point of the silane-modified polyolefin-based polymer is 70°C or more, the curing reactions of a curable resin composition and a hot-melt adhesive using the curable resin composition after cooling and solidification are further promoted. When the softening point of the silane-modified polyolefin-based polymer is 160°C or less, a curable resin composition and a hot-melt adhesive using the curable resin composition can be more easily applied to adherends. In the present specification, the softening point of the silane-modified polyolefin-based polymer refers to a value measured in accordance with the testing methods for the softening point of hot-melt adhesives prescribed in JIS K 6863.

In the present invention, preferred is a method for producing a silane-modified polyolefin-based polymer by graft polymerization of a silane-modified monomer having an ethylenically unsaturated group to a polyolefin-based polymer in the presence of the polyolefin-based polymer, the silane-modified monomer having an ethylenically unsaturated group, and a radical initiator.

The details of the polyolefin-based polymer are as described in "Polyolefin-based polymer" above, unless otherwise specified.

The details of the radical initiator are as described in "Silane-Modified Organic Polymer" above, unless otherwise specified. The radical initiators used in the production of the silane-modified polyolefin-based polymer are preferably dicumyl peroxide and t-butylperoxyisopropyl carbonate.

The details of the silane-modified monomer having an ethylenically unsaturated group are as described in "Silane-Modified Organic Polymer" above, unless otherwise specified. Examples of the ethylenically unsaturated group include vinyl, allyl, acrylic, and methacrylic groups.

In the present invention, the silane-modified polyolefin-based polymer is preferably a graft polymer of a polyolefin-based polymer and a silane-modified monomer having an ethylenically unsaturated group.

The silane-modified monomer having an ethylenically unsaturated group used in the production of the silane-modified polyolefin-based polymer is preferably 3-methacryloxypropyltrimethoxysilane.

The amount of the radical initiator used in the production of the silane-modified polyolefin-based polymer is preferably 0.5 to 10 parts by mass, more preferably 0.75 to 8 parts by mass, and particularly preferably 1 to 5 parts by mass, per 100 parts by mass of the polyolefin-based polymer. When the amount of the radical initiator is 0.5 parts by mass or more, the graft polymerization reaction sufficiently proceeds, and the thermal creep resistance after curing and adhesive strength after curing of a curable resin composition and a hot-melt adhesive using the curable resin composition are further improved. When the amount of the radical initiator is 10 parts by mass or less, side reactions, such as the homopolymerization of the silane-modified monomer or the decomposition reaction of the polyolefin-based polymer, are further suppressed.

The amount of the silane-modified monomer used in the production of the silane-modified polyolefin-based polymer is preferably 0.5 to 10 parts by mass, more preferably 0.75 to 8 parts by mass, and particularly preferably 1 to 5 parts by mass, per 100 parts by mass of the polyolefin-based polymer. When the amount of the silane-modified monomer used is 0.5 parts by mass or more, the graft polymerization reaction sufficiently proceeds, and the thermal creep resistance after curing and adhesive strength after curing of a curable resin composition and a hot-melt adhesive using the curable resin composition are further improved. When the amount of the silane-modified monomer used is 10 parts by mass or less, side reactions, such as the homopolymerization of the silane-modified monomer or the decomposition reaction of the polyolefin-based polymer, are further suppressed.

The mass ratio of the amount of the radical initiator to the amount of the silane-modified monomer used in the production of the silane-modified polyolefin-based polymer (radical initiator:silane-modified monomer) is preferably 1:0.2 to 1:10, more preferably 1:0.4 to 1:5, and particularly preferably 1:0.6 to 1:2.5. When the mass ratio of radical initiator to silane-modified monomer is within the range of 1:0.2 to 1:10, side reactions, such as the homopolymerization of the silane-modified monomer or the decomposition reaction of the polyolefin-based polymer, are further suppressed, and the thermal creep resistance after curing and adhesive strength after curing of a curable resin composition and a hot-melt adhesive using the curable resin composition are further improved.

The graft polymerization reaction can be performed in a melt, solution, solid, or swollen state. In the present invention, the graft polymerization reaction for the main chain skeleton of the polyolefin-based polymer using the silane-modified monomer can be performed by using various devices, such as a twin-screw extruder, a single-screw extruder, a Brabender, and a batch reactor.

Silane-Modified Polyoxyalkylene-based Polymer

Examples of the synthesis method of a silane-modified polyoxyalkylene-based polymer using a polyoxyalkylene-based polymer include a method of reacting an isocyanate group-containing silane-modified monomer with a reactive functional group at the end of the main chain skeleton of the polyoxyalkylene-based polymer.

The details of the polyoxyalkylene-based polymer are as described in "Polyoxyalkylene-based polymer" above, unless otherwise specified.

In the present invention, the melt viscosity at 190°C of the silane-modified polyoxyalkylene-based polymer is preferably 200 to 60000 mPa·s, more preferably 400 to 50000 mPa·s, and particularly preferably 600 to 40000 mPa·s. When the melt viscosity at 190°C of the silane-modified polyoxyalkylene-based polymer is 200 mPa·s or more, the thermal creep resistance after curing and adhesive strength after curing of a curable resin composition and a hot-melt adhesive using the curable resin composition are further improved. When the melt viscosity at 190°C of the silane-modified polyoxyalkylene-based polymer is 60000 mPa·s or less, a curable resin composition and a hot-melt adhesive using the curable resin composition can be more easily applied to adherends. In the present specification, the melt viscosity at 190°C of the silane-modified polyoxyalkylene-based polymer refers to a value measured in accordance with the testing methods for melt viscosity of hot-melt adhesives prescribed in JIS K 6862.

In the present invention, the number average molecular weight of the silane-modified polyoxyalkylene-based

polymer is preferably 2000 to 80000, and more preferably 4000 to 70000. When the number average molecular weight of the silane-modified polyoxyalkylene-based polymer is 2000 or more, the thermal creep resistance after curing and adhesive strength after curing of a curable resin composition and a hot-melt adhesive using the curable resin composition are further improved. When the number average molecular weight of the silane-modified polyoxyalkylene-based polymer is 80000 or less, a curable resin composition and a hot-melt adhesive using the curable resin composition can be more easily applied to adherends. In the present specification, the number average molecular weight of the silane-modified polyoxyalkylene-based polymer refers to a polystyrene-equivalent value measured by gel permeation chromatography (GPC, according to DIN 55 672).

In the present invention, preferred is a method for producing a silane-modified polyoxyalkylene-based polymer by graft-polymerization of a silane-modified monomer having an isocyanate group to a polyoxyalkylene-based polymer in the presence of the polyoxyalkylene-based polymer and the silane-modified monomer having an isocyanate group. Examples of other methods for producing a silane-modified polyoxyalkylene-based polymer include the production methods described in JPS45-36319B, JPS46-12154B, JPS50-156599A, JPS54-6096A, JPS55-13767A, JPS55-13468A, JPS57-164123A, JPH3-2450B, US3632557A, US4345053A, US4366307A, US4960844A, JPS61-197631A, JPS61-215622A, JPS61-215623A, JPS61-218632A, JPH3-72527A, JPH3-47825A, JPH8-231707A, and the like.

In the present invention, the silane-modified polyoxyalkylene-based polymer is preferably a graft polymer of the polyoxyalkylene-based polymer and the silane-modified monomer having an isocyanate group.

Examples of the silane-modified monomer having an isocyanate group include γ-isocyanatopropyltrimethoxysilane, γ-isocyanatopropylmethyldimethoxysilane, γ-isocyanatopropyltriethoxysilane (3-isocyanatopropyltriethoxysilane), and γ-isocyanatopropylmethyldiethoxysilane.

Hansen Solubility Parameter (HSP) Values and Interaction Radius

Hansen solubility parameters (HSP) are values used to predict the solubility of a substance. HSP is based on the idea that "two substances with similar intermolecular interactions tend to dissolve into each other." HSP refer to parameters in vector quantity determined by dividing the Hildebrand solubility parameter into the following three cohesive energy components: London dispersion force, dipole force, and hydrogen bonding force. In the present invention, the component corresponding to the London dispersion force in the HSP is described as "dispersion term" (also "δd"), the component corresponding to the dipole force is described as "polarity term" (also "δp"), and the component corresponding to the hydrogen bonding force is described as "hydrogen bonding term" (also "δh"). These three parameters can be regarded as coordinates in a three-dimensional space (Hansen space). When the HSP of two substances are placed in Hansen space, the closer the distance between the two points, the more likely they are to dissolve into each other.

Since HSP is a vector quantity, it is known that few pure substances have exactly the same values. A database has also been constructed for the HSP of commonly used substances. Thus, a person skilled in the art can obtain the HSP values of a desired substance by referring to the database.

Even for a substance with its HSP values not registered in the database, a person skilled in the art can calculate the HSP values from its chemical structure by using computer software such as Hansen Solubility Parameters in Practice (HSPiP).

Alternatively, HSP values of a substance whose HSP values are not registered can be determined by conducting dissolution tests by using multiple solvents whose HSP values are known and inputting the obtained solubility into HSPiP. In the case of a mixture of multiple substances, the HSP values of the mixture are calculated as the sum of the values determined by multiplying the HSP values of each substance (a component of the mixture) by the volume ratio of the substance to the entire mixture.

For HSP, refer to, for example, Hiroshi Yamamoto, S. Abbott, C. M. Hansen, Chemical Industry, March 2010. For the HSP distance, refer to, for example, Hiroshi Yamamoto, S. Abbott, C. M. Hansen, Chemical Industry, April 2010.

The HSP values and interaction radius $R_0$ in the present specification were determined by using the dissolution test methods described in S. Abbott, C. M. Hansen, Chemical Industry, March 2010, and Hiroshi Yamamoto, S. Abbott, C. M. Hansen, Chemical Industry, April 2010. The detailed calculation methods of the HSP values and interaction radius $R_0$ are as described in the Examples, provided later.

In the present invention, the distance Ra-b between the HSP values of the silane-modified organic polymer and the HSP values of the alcohol can be determined by the following mathematical formula. In mathematical formula (I) below, $\delta d_1$, $\delta p_1$, and $\delta h_1$ respectively represents the HSP values, i.e., dispersion term, polarity term, and hydrogen bonding term, of the silane-modified organic polymer. Further, $\delta d_2$, $\delta p_2$, and $\delta h_2$ respectively represents the HSP values, i.e., dispersion term, polarity term, and hydrogen bonding term, of the alcohol.

$$R_{a-b}{}^{2} = 4\ (\delta d_{2} - \delta d_{1})^{2} + (\delta p_{2} - \delta p_{1})^{2} + (\delta h_{2} - \delta h_{1})^{2}$$

In the present invention, the relative energy difference (RED) based on the Hansen solubility parameter (HSP) values of the silane-modified organic polymer and alcohol can be determined by the following mathematical formula. In mathematical formula (II) below, $R_0$ represents an interaction radius of the silane-modified organic polymer, and Ra-b represents the distance between the HSP values of the silane-modified organic polymer and the HSP values of the alcohol.

$$\text{Relative energy difference (RED)} = \frac{R_{a-b}}{R_{0}}$$

In the present invention, the RED between the silane-modified organic polymer and the alcohol is 1.0 to 3.0. In the present invention, the RED between the silane-modified organic polymer and the alcohol is preferably 1.01 to 2.75, and more preferably 1.02 to 2.5. In the present invention, if the RED between the silane-modified organic polymer and the alcohol is less than 1.0, the silane-modified organic polymer containing a hydrolyzable silyl group and the alcohol show excellent compatibility; thus, even after cooling and solidification of the curable resin composition, the moisture curing reaction between the hydrolyzable silyl group and atmospheric moisture or water contained in the adherend is inhibited. If the RED between the silane-modified organic polymer and the alcohol is larger than 3.0, the compatibility between the silane-modified organic polymer and the alcohol is low, and the moisture curing reaction cannot sufficiently be suppressed. Further, if the RED between the silane-modified organic polymer and the alcohol is larger than 3.0, the alcohol bleeds out from the curable resin composition, causing a problem of reduction in storage stability.

Alcohol

The present invention contains an alcohol as an essential component. In the present specification, the alcohol refers to one having at least one or more hydroxyl groups (-OH) in its structure.

In the present invention, the melting point of the alcohol is preferably 40°C or less, more preferably 30°C or less, and even more preferably 20°C or less. When the melting point of the alcohol is 40°C or less, the moisture curing reaction of the silane-modified organic polymer due to moisture contained in the air or adherend can be further suppressed, resulting in further improvement of storage stability.

In the present invention, the molecular weight of the alcohol is preferably 10000 or less, more preferably 8000 or less, and particularly preferably 6000 or less. When the molecular weight of the alcohol is 10000 or less, the moisture curing reaction of the silane-modified organic polymer due to moisture contained in the air or adherend can be further suppressed, resulting in further improvement of storage stability.

In the present invention, the alcohol is preferably a monovalent or higher alcohol, a primary alcohol, a secondary alcohol, or a tertiary alcohol. The hydrocarbon group to which the hydroxyl group in the alcohol is bonded may have a chain structure or a ring structure. The hydrocarbon group may be bonded only through a saturated bond, or may contain one or more unsaturated bonds. Further, the hydrocarbon group may have one or more other substituents in its structure, and may have, for example, a substituent containing atoms other than carbon and hydrogen atoms in its structure. Atoms other than carbon and hydrogen atoms are, for example, oxygen and/or nitrogen atoms.

Examples of the hydrocarbon group to which the hydroxyl group in the alcohol is bonded include alkyl, alkenyl, alkynyl, aryl, arylalkyl, arylalkenyl, and arylalkynyl groups. The number of carbon atoms in the alkyl, alkenyl, and alkynyl groups is not particularly limited. The number of carbon atoms in the alkyl group is preferably 1 to 25, and more preferably 3 to 20. Further, the number of carbon atoms in the alkenyl and alkynyl groups is preferably 2 to 25, and more preferably 3 to 20. When the alkyl, alkenyl, and alkynyl groups have a ring structure (e.g., a cycloalkyl group, a cycloalkenyl group, and a cycloalkynyl group), the number of carbon atoms is preferably 4 to 10, more preferably 5 to 8, and even more preferably 6 to 8.

Examples of the alkyl group include methyl, ethyl, n-propyl, i-propyl, n-butyl, i-butyl, sec-butyl, t-butyl, pentyl, isopentyl, neopentyl, hexyl, heptyl, octyl, and 2-ethylhexyl groups. Examples of the cycloalkyl group include cyclopentyl, cyclohexyl, cycloheptyl, and 2-methylcyclohexyl groups. Examples of the alkenyl group include vinyl, allyl, and isopropenyl groups. Examples of the cycloalkenyl group include a cyclohexenyl group.

The number of carbon atoms in the aryl, arylalkyl, arylalkenyl, and arylalkynyl groups (hereinafter collectively referred to as "the aryl group etc.") is not particularly limited. The number of carbon atoms in the aryl group etc. is preferably 6 to 15, more preferably 6 to 12, and even more preferably 6 to 10. The aryl group etc. may have one or more

other substituents. For example, the aromatic ring contained in the aryl group etc. may have one or more other substituents. For example, the aryl group may be an unsubstituted aryl group or a substituted aryl group. The position of the substituent located in the aromatic ring may be any of o-, m-, and p-. Examples of such substituents include at least one member selected from the group consisting of halogen atoms (F, Cl, Br, I, etc.), alkyl groups, and alkoxy groups.

Examples of the aryl group include phenyl, tolyl, ethylphenyl, xylyl, cumenyl, mesityl, halogenated phenyl (o-, m-, and p-), methoxyphenyl (o-, m-, and p-), ethoxyphenyl (o-, m-, and p-), 1-naphthyl, 2-naphthyl, and biphenyl groups.

Specific examples of the arylalkyl group include benzyl, methoxybenzyl (o-, m-, and p-), ethoxybenzyl (o-, m-, and p-), and phenethyl groups.

Examples of the arylalkenyl group include styryl and cinnamyl groups.

Examples of the monovalent alcohol include a monovalent alcohol represented by the following formula (2) or (3). In formula (2), Ra represents an aryl group, and m represents an integer of 1 or more. In formula (3), Rb to Rd represent hydrogen atoms or monovalent hydrocarbon groups. Rb to Rd may be the same groups or atoms, or may be different groups or atoms. Further, Rc and Rd may be bonded to form a ring structure.

$$R_a-(CH_2)_m-OH \qquad (2)$$

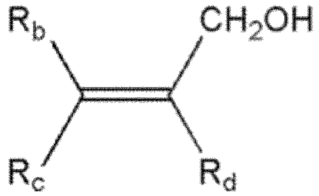

(3)

In formula (2), Ra may be a benzene-based aromatic compound-derived aryl group or a non-benzene-based aromatic compound-derived aryl group. Examples of the benzene-based aromatic compound-derived aryl group include phenyl groups, fused ring aromatic compound-derived aryl groups (naphthyl group etc.), and aryl groups derived from heteroaromatic compounds (furan, thiophene, pyrrole, imidazole, etc.).

The aromatic ring contained in the aryl group may have one or more other substituents. For example, the phenyl groups include not only an unsubstituted phenyl group ($C_6H_5$-) but also a substituted phenyl group. The position of the substituent may be any of o-, m-, and p-. The substituent is preferably a halogen atom (Cl, Br, I, etc.) or an electron-donating group. The type and structure of the electron-donating group are not particularly limited. Examples of the electron-donating group include alkyl and alkoxy groups.

In formula (2), m represents an integer of 1 or more, preferably an integer of 1 to 5, more preferably an integer of 1 to 3, and particularly preferably 1 or 2.

In formula (3), the type and structure of the monovalent hydrocarbon group that forms Rb to Rd are not particularly limited. The contents of the monovalent hydrocarbon correspond to the explanation of Ra. Specific combinations of Rb to Rd are not particularly limited. Rb and Rc may be such monovalent hydrocarbon groups, and Rd may be a hydrogen atom. Alternatively, Rb and Rc may be hydrogen atoms, and Rd may be such a monovalent hydrocarbon group. Further, at least one of Rb to Rd is preferably an aryl group. The contents of the aryl group correspond to the explanation of Ra.

In the present invention, examples of alcohols include methanol, ethanol, 1-propanol, 2-propanol, 1-butanol, 2-butanol, isobutyl alcohol, t-butyl alcohol, 1-pentanol, 2-pentanol, 3-pentanol, 3-methyl-1-butanol, 2-methyl-1-butanol, 2,2-dimethyl-1-propanol, 3-methyl-2-butanol, 2-methyl-2-butanol, 1-hexanol, 3,3-dimethyl-1,2-butanediol, 1-heptanol, 1-octanol, 1-nonanol, 1-decanol, 1-undecanol, lauryl alcohol, cyclohexanol, 3-cyclohexyl-1-propanol, 2-phenyl-2-propanol, 3-(4-chlorophenyl)propan-1-ol, 1,3-naphthalenediol, 2,7-naphthalenediol, 1-buten-3-ol, 8-nonen-l-ol, cis-3-nonen-1-ol, ethylene glycol, 1,2-propanediol, 1,3-propanediol, neopentyl glycol (2,2-dimethyl-1,3-propanediol), trimethylolpropane, triethanolamine, sorbitol, polyether polyol, and polyester polyol. Preferred among these in terms of storage stability are ethanol, t-butyl alcohol, 3,3-dimethyl-1,2-butanediol, 1-undecanol, 2-phenyl-2-propanol, and 2,2-dimethyl-1,3-propanediol. These alcohols can be used alone or in a combination of two or more.

In the present invention, the content of alcohol is preferably 10 to 5000 mass ppm, more preferably 15 to 1000 mass ppm, even more preferably 18 to 500 mass ppm, still more preferably 20 to 300 mass ppm, and particularly preferably 25 to 200 mass ppm, based on the mass of the silane-modified organic polymer.

Curing Catalyst

The present invention contains a curing catalyst as an essential component. In the present invention, the curing

catalyst can accelerate the dehydration condensation reaction of the hydrolyzable silyl groups contained in the silane-modified organic polymer. The details of the hydrolyzable silyl groups are as described in "Hydrolyzable Silyl Group" above, unless otherwise specified.

Examples of curing catalysts include organic bases, organic acids, carboxylates of metals (tin, zinc, iron, lead, cobalt, etc.), and organotitanates. These curing catalysts can be used alone or in a combination of two or more.

Examples of organic bases include N-dimethylaniline, N,N-dimethyltoluidine, N,N-dimethyl-p-anisidine, p-halogeno-N,N-dimethylaniline, 2-N-ditylanilinoethanol, tri-O-butylamine, pyridine, quinoline, N-methylmorpholine, triethanolamine, triethylenediamine, N,N-dimethylbenzylamine, N,N,N',N'-tetramethylbutanediamine, and other tertiary amines. These organic bases can be used alone or in a combination of two or more.

Examples of organic acids include toluenesulfonic acid, dodecylbenzenesulfonic acid, acetic acid, stearic acid, and maleic acid. These organic acids can be used alone or in a combination of two or more.

Examples of carboxylates of metals (tin, zinc, iron, lead, cobalt, etc.) include dibutyltin dilaurate, dioctyltin dilaurate, dioctyltin maleate, dibutyltin diacetate, dibutyltin dioctate, stannous acetate, stannous octoate, lead naphthenate, zinc caprylate, and cobalt naphthenate. These carboxylates can be used alone or in a combination of two or more.

Examples of organotitanates include tetrabutyl titanate, tetrapropoxy titanate, tetraethoxy titanate, tetraamyl titanate, titanium diisopropoxybisethylacetoacetate, and diisopropoxybisacetylacetonate. These organotitanates can be used alone or in a combination of two or more.

In the present invention, the curing catalyst is preferably at least one member selected from the group consisting of dibutyltin dilaurate, dioctyltin dilaurate, dioctyltin maleate, dibutyltin diacetate, dibutyltin dioctate, stannous acetate, stannous octoate, lead naphthenate, zinc caprylate, and cobalt naphthenate; and more preferably dibutyltin dilaurate.

The content of the curing catalyst in the curable resin composition of the present invention is preferably 0.0001 to 2.0 parts by mass, more preferably 0.0005 to 1.0 part by mass, even more preferably 0.001 to 0.5 parts by mass, and particularly preferably 0.025 to 0.1 parts by mass, per 100 parts by mass of the silane-modified organic polymer. Specific examples of the curing catalyst are as described above.

The curable resin composition of the present invention may contain various additives, as necessary, within the range that does not essentially impair the object of the present invention. Such various additives include tackifiers, waxes, diluents, antioxidants, and the like.

Tackifier

When the present invention contains a tackifier, the content of the tackifier is generally 30 mass% or less, preferably 20 mass% or less, and more preferably 10 mass% or less, in 100 mass% of the curable resin composition. The tackifying resin for use can be selected from a wide range of known commercial products, and examples include Eastotac (registered trademark) H-100, H-115, H130, and H142, produced by Eastman Chemical; Escorez (registered trademark) 5300, 5637, and 5400, as well as Escorez (registered trademark) 5600, produced by ExxonMobil Chemical; Wingtack (registered trademark) Extra and Hercolite (registered trademark) 2100, produced by Goodyear Chemical; and Zonatac (registered trademark) 105 and 501 Lite, produced by Arizona Chemical.

Wax

When the present invention contains a wax, the content of the wax is generally 30 mass% or less, preferably 20 mass% or less, and more preferably 10 mass% or less, in 100 mass% of the curable resin composition. The wax for use can be selected from a wide range of known waxes, and examples include paraffinic wax, microcrystalline wax, high-density/low-molecular-weight polyethylene wax, pyrolytic wax, byproduct polyethylene wax, Fischer-Tropsch wax, oxidized Fischer-Tropsch wax, and functionalized wax (e.g., hydroxystearamide wax and fatty amide wax) .

Diluent

When the present invention contains a diluent, the content of the diluent is generally 30 mass% or less, preferably 20 mass% or less, and more preferably 10 mass% or less, in 100 mass% of the curable resin composition. The diluent for use can be selected from a wide range of known diluents, and examples include white mineral oil (e.g., Kaydol (registered trademark) oil, produced by Witco), and naphthenic oil (e.g., Shellflex (registered trademark) 371, produced by Shell Oil, and Calsol 5550, produced by Calumet Lubricants).

Antioxidant

When the present invention contains an antioxidant, the content of the antioxidant is generally 0.5 mass% or less, and preferably 0.2 mass% or less, in 100 mass-°s of the curable resin composition. The antioxidant for use can

be selected from a wide range of known antioxidants, and examples include hindered phenolic antioxidants (Irganox (registered trademark) 565, 1010, and 1076, produced by Ciba-Geigy), phosphite antioxidants (Irgafos (registered trademark) 168, produced by Ciba-Geigy), Cyanox (registered trademark) LTDP, produced by Cytec Industries, and Ethanox (registered trademark) 1330, produced by Albemarle.

## Examples

The present invention is described in detail below with reference to Examples; however, the present invention is not limited to the following Examples.

### Evaluation Methods

Evaluations in the Examples and Comparative Examples were performed using the following measurement methods.

#### (1) Hansen Solubility Parameter (HSP) Values and Interaction Radius

The HSP values, i.e., dispersion term ($\delta d_2$), polarity term ($\delta p_2$), and hydrogen bonding term ($\delta h_2$), of the alcohols used in the Examples and Comparative Examples were each referenced to a constant registered in a known database.

The HSP values, i.e., dispersion term ($\delta d_1$), polarity term ($\delta p_1$), and hydrogen bonding term ($\delta h_1$), of the silane-modified organic polymers were calculated by performing a dissolution test using a solvent with known HSP.

Then, the distance "Ra-b" between the HSP values of the silane-modified organic polymer and the HSP values of the alcohol was calculated by the following formula:

$$(Ra\text{-}b)^2=4(\delta d_2-\delta d_1)^2+(\delta p_2-\delta p_1)^2+(\delta h_2-\delta h_1)^2$$

wherein

$\delta d_1$ represents the HSP dispersion term of the silane-modified organic polymer,
$\delta p_1$ represents the HSP polarity term of the silane-modified organic polymer,
$\delta h_1$ represents the HSP hydrogen bonding term of the silane-modified organic polymer,
$\delta d_2$ represents the HSP dispersion term of the alcohol,
$\delta p_2$ represents the HSP polarity term of the alcohol,
$\delta h_2$ represents the HSP hydrogen bonding term of the alcohol, and
Ra-b represents the distance between the HSP values of the silane-modified organic polymer and the HSP values of the alcohol in the HSP space.

The interaction radius ($R_0$) of the silane-modified organic polymer was calculated by imputing the dissolution test results into HSPiP.

Table 2 shows the HSP values ($\delta d_1$, $\delta p_1$,and $\delta h_1$) and interaction radius ($R_0$) of the silane-modified organic polymers and the HSP values ($\delta d_2$, $\delta p_2$, and $\delta h_2$) of the alcohols.

#### (2) Melt Viscosity

The melt viscosity (mPa·s) at 190°C of the organic polymers was measured in accordance with the testing methods for melt viscosity of hot-melt adhesives prescribed in JIS K 6862. Table 1 shows the measurement results.

#### (3) Number Average Molecular Weight

The number average molecular weight of the organic polymers was measured by gel permeation chromatography (GPC, according to DIN 55 672). Table 1 shows the measurement results.

#### (4) Storage Stability

The storage stability was measured based on the difference value between the gel fraction of film samples and the gel fraction of storage samples. The storage stability was evaluated by (i) preparing film sample 1 and film sample 2, (ii) measuring the gel fraction of film sample 1, (iii) leaving film sample 2 in a nitrogen-substituted environment to prepare a storage sample, and (iv) measuring the gel fraction of the storage sample. Film sample 1 and film sample 2

are each independent and have the same properties. (ii) and (iii) were performed simultaneously. The evaluation method of storage stability is explained below.

First, the produced curable resin composition was subjected to pressure film formation using a 200-μm spacer in a 140°C environment at 10 MPa for 30 seconds, thereby preparing film sample 1 and film sample 2. For the formation of film sample 1 and film sample 2, SA-302 Tabletop Test Press produced by Tester Sangyo Co., Ltd. was used. After leaving the prepared film sample 2 in a nitrogen-substituted environment at 23°C and 50% RH for 1000 hours, a storage sample was prepared. 0.25 g of film sample 1 or the storage sample was fractionated and then added to 20 ml of xylene within 24 hours. The prepared xylene solution was heated in a 100°C environment for 1 hour. After heating, the xylene solution was filtered through a SUS mesh (30 μm). The filtrate remaining in the SUS mesh was dried under reduced pressure in a 75°C environment for 12 hours or more. After drying, the weight of the filtrate was measured. The weight of the filtrate was divided by the weight of the fractionated film sample 1 or the weight of the storage sample to calculate the gel fraction of film sample 1 and the gel fraction of the storage sample. A difference between the gel fraction of film sample 1 and the gel fraction of the storage sample of 10 wt% or less was evaluated as "A," and a difference of more than 10 wt% was evaluated as "B." Table 2 shows the evaluation results.

(5) Pot Life Properties

A predetermined amount of the produced curable resin composition was fractionated, and the melt viscosity 1 (mPa·s) at 180°C of the curable resin composition was measured in accordance with the testing methods for melt viscosity of hot-melt adhesives prescribed in JIS K 6862. Further, a predetermined amount of the produced curable resin composition was introduced into a flask equipped with a reflux tube and stirred in a 180°C environment at 120 rpm for 24 hours. A predetermined amount of the stirred curable resin composition was fractionated, and the melt viscosity 2 at 180°C of the curable resin composition was measured in accordance with the testing methods for melt viscosity of hot-melt adhesives prescribed in JIS K 6862. The melt viscosity 1 and melt viscosity 2 of the curable resin compositions were evaluated as follows: (melt viscosity 2/melt viscosity 1)≤1.1 was "A," 1.1<(melt viscosity 2/melt viscosity 1)≤1.2 was "B," and (melt viscosity 2/melt viscosity 1)>1.2 was "C." Table 2 shows the evaluation results.

(6) Curability

The produced curable resin composition was subjected to pressure film formation using a 200-μm spacer in a 140°C environment at 10 MPa for 30 seconds, thereby preparing a film sample. The prepared film sample was cured in 60°C hot water for 7 days and then aged at 23°C and 50% RH for one day, thereby obtaining a measurement sample. 0.25 g of the measurement sample was fractionated and then added to 20 ml of xylene within 24 hours. The prepared xylene solution was heated in a 100°C environment for 1 hour. After heating, the xylene solution was filtered through a SUS mesh (30 μm). The filtrate remaining in the SUS mesh was dried under reduced pressure in a 75°C environment for 12 hours or more. After drying, the weight of the filtrate was measured. The weight of the filtrate was divided by the weight of the fractionated measurement sample to calculate the gel fraction of the measurement sample. Results in which the gel fraction of the measurement sample was 60 mass% or more were evaluated as "A," and results in which it was less than 60 mass% were evaluated as "B." Table 2 shows the evaluation results. For the preparation of film samples and adhesive samples, SA-302 Tabletop Test Press produced by Tester Sangyo Co., Ltd. was used.

(7) Adhesive Strength (20°C)

The produced curable resin composition was subjected to pressure film formation using a 200-μm spacer in a 140°C environment at 10 MPa for 30 seconds, thereby preparing a film sample. The obtained film sample was cut into a width of 25 mm and a length of 50 mm. The cut sample was placed between the following adherend 1 and adherend 2 together with a 100-μm spacer, and pressurized at 1 MPa for 10 seconds in a 140°C environment, thereby preparing an adhesive sample. The prepared adhesive sample was cured in 60°C hot water for 7 days and then aged at 23°C and 50% RH for one day, thereby obtaining a measurement sample. The measurement sample was measured for 180-degree peel adhesive strength at 20°C at a peel rate of 300 mm/min as the adhesive strength (20°C) . Results with an adhesive strength (20°C) of 3.0 N/25 mm or more were evaluated as "A," and results with an adhesive strength (20°C) of less than 3.0 N/25 mm were evaluated as "B." Table 2 shows the evaluation results. For the preparation of film samples and adhesive samples, SA-302 Tabletop Test Press produced by Tester Sangyo Co., Ltd. was used. Adherend 1: PP board (thickness: 2 mm) Adherend 2: CPP film (thickness: 80 μm)

(8) Adhesive Strength (80°C)

First, measurement samples were obtained by the same process as in "(7) Adhesive Strength (20°C)" above.

Then, the measurement samples were measured for 180-degree peel adhesive strength at 80°C at a peel rate of 300 mm/min as the adhesive strength (80°C) . Results with an adhesive strength (80°C) of 3.0 N/25 mm or more were evaluated as "A," and results with an adhesive strength (80°C) of less than 3.0 N/25 mm were evaluated as "B." Table 2 shows the evaluation results. For the preparation of film samples and adhesive samples, SA-302 Tabletop Test Press produced by Tester Sangyo Co., Ltd., a PP board (thickness: 2 mm) as adherend 1, and a CPP film (thickness: 80 μm) as adherend 2 were used.

(9) Thermal Creep Resistance (100°C)

The produced curable resin composition was subjected to pressure film formation using a 200-μm spacer in a 140°C environment at 10 MPa for 30 seconds, thereby preparing a film sample. The obtained film sample was cut into a width of 25 mm and a length of 25 mm. The cut sample was placed between the following adherend 1 and adherend 2 together with a 100-μm spacer, and pressurized at 1 MPa for 10 seconds in a 140°C environment, thereby preparing an adhesive sample (Fig. 1). The prepared adhesive sample was cured in 60°C hot water for 7 days and then aged at 23°C and 50% RH for one day, thereby obtaining a measurement sample. A weight was placed so that a 100-g load was applied vertically to the edge of the adhesive surface of the obtained measurement sample (Fig. 2), and the thermal creep resistance (100°C) was measured after 24 hours in a 100°C environment. Specifically, after 24 hours in a 100°C environment, a measurement sample with a peeling length on its adhesive surface of less than 10 mm was evaluated as "A," and a measurement sample with a peeling length of 10 mm or more was evaluated as "B." Table 2 shows the evaluation results. For the preparation of film samples and adhesive samples, SA-302 Tabletop Test Press produced by Tester Sangyo Co., Ltd. was used. Adherend 1: PP board (thickness: 2 mm) Adherend 2: CPP film (thickness: 80 μm)

(10) Thermal Creep Resistance (110°C)

First, measurement samples were obtained by the same process as in "(9) Thermal Creep Resistance (100°C)" above. Then, a weight was placed so that a 100-g load was applied vertically to the edge of the adhesive surface of the obtained measurement sample, and the thermal creep resistance (110°C) was measured after 24 hours in a 110°C environment. Specifically, after 24 hours in a 110°C environment, a measurement sample with a peeling length on its adhesive surface of less than 10 mm was evaluated as "A," and a measurement sample with a peeling length of 10 mm or more was evaluated as "B." Table 2 shows the evaluation results. For the preparation of film samples and adhesive samples, SA-302 Tabletop Test Press produced by Tester Sangyo Co., Ltd., a PP board (thickness: 2 mm) as adherend 1, and a CPP film (thickness: 80 μm) as adherend 2 were used.

In the Examples and Comparative Examples, organic polymer A-1, organic polymer A-2, or organic polymer A-3 shown in Table 1 below was used. Organic polymer A-1 and organic polymer A-2 were produced by a solution polymerization method using heptane as an organic solvent and bis(t-butylcyclopentadienyl) zirconium dichloride as a metallocene catalyst. The polymers that form the main chain skeleton of organic polymer A-1 and the main chain skeleton of organic polymer A-2 are propylene homopolymers. Organic polymer A-3 was produced by a polymerization method using a catalyst composed of a phosphazene compound, and 1-tert-butyl-4,4,4-tris(dimethylamino)-2,2-bis [tris (dimethylamino) phosphoranylideneamino] -2$\lambda^5$,4$\lambda^5$-catenadi(phosphazene) was used as a phosphazene compound. The polymer that forms the main chain skeleton of organic polymer A-3 is a polyoxypropylene-polyoxybutylene copolymer.

Table 1

| Organic polymer | A-1 | A-2 | A-3 |
|---|---|---|---|
| Polymer forming main chain skeleton | Propylene homopolymer (polyolefin-based polymer) | Propylene homopolymer (polyolefin-based polymer) | Polyoxypropylene-polyoxybutylene copolymer (polyoxyalkylene-based polymer) |
| Melt viscosity at 190°C (mPa·s) | 10000 | 1000 | 600 |
| Number average molecular weight | 67000 | 44000 | 40000 |

Example 1

Production of Curable Resin Composition B-1

100 parts by mass of organic polymer A-1, 1.5 parts by mass of KBM-503 (3-methacryloxypropyltrimethoxysilane, produced by Shin-Etsu Polymer Co., Ltd.) as a silane-modified monomer, and 1.5 parts by mass of Percumyl D (dicumyl peroxide, produced by NOF Corporation) as a radical initiator were simultaneously introduced into the feed port of a twin-screw extruder (product name: KZW15TW-45/60MG-NH(-2200) (screw outer diameter: 15 mm, L/D = 45), produced by Technovel Corporation) and reacted, thereby obtaining a silane-modified polyolefin-based polymer. Table 2 shows the HSP values ($\delta d_1$, $\delta p_1$, and $\delta h_1$) and interaction radius ($R_0$) of the obtained silane-modified polyolefin-based polymer and the HSP values ($\delta d_2$, $\delta p_2$, and $\delta h_2$) of 2-phenyl-2-propanol. As shown in Table 2, the relative energy difference (RED) between the silane-modified polyolefin-based polymer and 2-phenyl-2-propanol calculated from these results was 1.02. The operating conditions of the twin-screw extruder were set so that the amount of unreacted radical initiator at the end barrel section was 20 mol% or less relative to the initial amount of radical initiator added. Specifically, the barrel temperature was set to 175°C, and the extrusion rate was set to 1.0 to 1.5 kg/h. Further, during extrusion by the twin-screw extruder, the unreacted silane-modified monomer and byproducts of the reaction (the decomposed radical initiator, homopolymers of the silane-modified monomer, etc.) were removed from the vacuum vent located in the barrel section located toward the end of the extruder.

The obtained silane-modified polyolefin-based polymer was cooled and solidified by natural cooling. 100 mass ppm of 2-phenyl-2-propanol as an alcohol was added to the cooled and solidified silane-modified polyolefin-based polymer, and further 0.005 parts by mass of Neostann U-100 (dibutyltin dilaurate, produced by Nitto Kasei Co., Ltd.) as a curing catalyst was added per 100 parts by weight of the silane-modified polyolefin-based polymer, followed by mixing using a universal stirrer, thereby producing curable resin composition B-1.

Examples 2, 3, 5, 6, and 8 to 10

Production of Curable Resin Compositions B-2, B-3, B-5, B-6, B-8, B-9, and B-10

Using the organic polymers, radical initiators, and silane-modified monomers shown in Table 2, silane-modified polyolefin-based polymers were obtained by the same process as in Example 1. The obtained silane-modified polyolefin-based polymers were each cooled and solidified in the same manner as in Example 1. The alcohols shown in Table 2 were added to the silane-modified polyolefin-based polymers in the amounts (mass ppm) shown in Table 2, further 0.005 parts by mass of the curing catalyst shown in Table 2 was added, and curable resin compositions (B-2, B-3, B-5, B-6, B-8, B-9, and B-10) were produced by the same process as in Example 1. Table 2 shows the HSP values ($\delta d_1$, $\delta p_1$, and $\delta h_1$) and interaction radius ($R_0$) of each silane-modified polyolefin-based polymer and the HSP values ($\delta d_2$, $\delta p_2$, and $\delta h_2$) of each alcohol. Table 2 shows the relative energy difference (RED) between each silane-modified polyolefin-based polymer and each alcohol calculated from these results.

Example 4

Production of Curable Resin Composition B-4

100 parts by mass of organic polymer A-3 and 1.2 parts by mass of KBE-9007N (3-isocyanatopropyltriethoxysilane, produced by Shin-Etsu Polymer Co., Ltd.) as a silane-modified monomer were introduced into a synthesis stove and stirred at 100°C for 2 hours, thereby obtaining a silane-modified polyoxyalkylene-based polymer. The obtained silane-modified polyoxyalkylene-based polymer was cooled and solidified by natural cooling. 100 mass ppm of t-butyl alcohol was added as an alcohol to the cooled and solidified silane-modified polyoxyalkylene-based polymer, and further 0.005 parts by mass of Neostann U-100 (dibutyltin dilaurate, produced by Nitto Kasei Co., Ltd.) as a curing catalyst was added per 100 parts by weight of the silane-modified polyolefin-based polymer, followed by mixing using a universal stirrer, thereby producing curable resin composition B-4. Table 2 shows the HSP values ($\delta d_1$, $\delta p_1$, and $\delta h_1$) and interaction radius ($R_0$) of the silane-modified polyoxyalkylene-based polymer and the HSP values ($\delta d_2$, $\delta p_2$, and $\delta h_2$) of t-butyl alcohol. As shown in Table 2, the relative energy difference (RED) between the silane-modified polyoxyalkylene-based polymer and t-butyl alcohol calculated from these results was 1.13.

Example 7

Production of Curable Resin Composition B-7

Using the organic polymer and silane-modified monomer shown in Table 2, a silane-modified polyoxyalkylene-based polymer was obtained by the same process as in Example 4. The obtained silane-modified polyoxyalkylene-based polymer was cooled and solidified in the same manner as in Example 4. 100 mass ppm of ethanol was added to the cooled and solidified silane-modified polyoxyalkylene-based polymer, further 0.005 parts by mass of the curing catalyst shown in Table 2 was added, and a curable resin composition was produced by the same process as in Example 4. Table 2 shows the HSP values ($\delta d_1$, $\delta p_1$, and $\delta h_1$) and interaction radius ($R_0$) of the silane-modified polyoxyalkylene-based polymer and the HSP values ($\delta d_2$, $\delta p_2$, and $\delta h_2$) of ethanol. Table 2 shows the relative energy difference (RED) between the silane-modified polyoxyalkylene-based polymer and ethanol calculated from these results.

Comparative Example 1

Production of Curable Resin Composition B-11

A silane-modified polyolefin-based polymer was obtained by the same process as in Example 1, except that 1.5 parts by mass of Perbutyl I (t-butylperoxyisopropyl monocarbonate, produced by NOF Corporation) was used as the radical initiator. The obtained silane-modified polyolefin-based polymer was cooled and solidified in the same manner as in Example 1. 100 mass ppm of stearyl alcohol as an alcohol was added to the cooled and solidified silane-modified polyolefin-based polymer, further 0.005 parts by mass of the curing catalyst shown in Table 2 was added, and curable resin composition B-11 was produced by the same process as in Example 1. Table 2 shows the HSP values ($\delta d_1$, $\delta p_1$,and $\delta h_1$) and interaction radius ($R_0$) of the silane-modified polyolefin-based polymer and the HSP values ($\delta d_2$, $\delta p_2$, and $\delta h_2$) of stearyl alcohol. As shown in Table 2, the relative energy difference (RED) between the silane-modified polyolefin-based polymer and stearyl alcohol calculated from these results was 0.97.

Comparative Example 2

Production of Curable Resin Composition B-12

A silane-modified polyolefin-based polymer was obtained by the same process as in Comparative Example 1. 100 mass ppm of ethanol as an alcohol was added to the cooled and solidified silane-modified polyolefin-based polymer, further 0.005 parts by mass of the curing catalyst shown in Table 2 was added, and curable resin composition B-12 was produced by the same process as in Example 1. Table 2 shows the HSP values ($\delta d_1$, $\delta p_1$, and $\delta h_1$) and interaction radius ($R_0$) of the silane-modified polyolefin-based polymer and the HSP values ($\delta d_2$, $\delta p_2$, and $\delta h_2$) of ethanol. As shown in Table 2, the relative energy difference (RED) between the silane-modified polyolefin-based polymer and ethanol calculated from these results was 3.45.

Comparative Example 3

Production of Curable Resin Composition B-13

Using the organic polymer and silane-modified monomer polymer shown in Table 2, a silane-modified polyoxyalkylene-based polymer was obtained by the same process as in Example 4, and cooled and solidified in the same manner as in Example 4. 100 mass ppm of stearyl alcohol as an alcohol was added to the cooled and solidified silane-modified polyoxyalkylene-based polymer, further 0.005 parts by mass of the curing catalyst shown in Table 2 was added, and curable resin composition B-13 was produced by the same process as in Example 4. Table 2 shows the HSP values ($\delta d_1$, $\delta p_1$, and $\delta h_1$) and interaction radius ($R_0$) of the silane-modified polyoxyalkylene-based polymer and the HSP values ($\delta d_2$, $\delta p_2$, and $\delta h_2$) of stearyl alcohol. As shown in Table 2, the relative energy difference (RED) between the silane-modified polyoxyalkylene-based polymer and stearyl alcohol calculated from these results was 0.81.

Comparative Example 4

Production of Curable Resin Composition B-14

Using the organic polymer, radical initiator, and silane-modified monomer shown in Table 2, a silane-modified polyolefin-based polymer was obtained by the same process as in Example 1, and cooled and solidified in the same

manner as in Example 1. 0.005 parts by mass of the curing catalyst shown in Table 2 was added to the cooled and solidified silane-modified polyolefin-based polymer, and curable resin composition B-14 was produced by the same process as in Example 1. In Comparative Example 4, no alcohol was added to the silane-modified polyolefin-based polymer.

Table 2 shows the raw materials used in Examples 1 to 10 and Comparative Examples 1 to 4, and the evaluation results etc. of curable resin compositions B-1 to B-14 produced.

Table 2

| | | Unit | Ex. 1 | Ex. 2 | Ex. 3 | Ex. 4 | Ex.5 | Ex. 6 | Ex. 7 | Ex. 8 | Ex. 9 | Ex. 10 | Comp. Ex. 1 | Comp. Ex.2 | Comp . Ex 3 | Comp. Ex 4 |
|---|---|---|---|---|---|---|---|---|---|---|---|---|---|---|---|---|
| Organic polymer | A-1 | parts by mass | 100 | - | 100 | - | 100 | 100 | - | 100 | 100 | 100 | 100 | 100 | - | 100 |
| | A-2 | parts by mass | - | 100 | - | - | - | - | - | - | - | - | - | - | - | - |
| | A-3 | parts by mass | - | - | - | 100 | - | - | 100 | - | - | - | - | - | 100 | - |
| Radical initiator | Percumyl D | parts by mass | 1.5 | 1.5 | - | - | - | - | - | - | - | - | - | - | - | - |
| | Perbutyl I | parts by mass | - | - | 1.5 | - | 1.5 | 1.5 | - | 1.5 | 1.5 | 1.5 | 1.5 | 1.5 | - | 1.5 |
| Silane-modified monomer | KBM-503 | parts by mass | 1.5 | 1.5 | 1.5 | - | 1.5 | 15 | - | 1.5 | 1.5 | 1.5 | 1.5 | 1.5 | - | 1.5 |
| | KBE-9007N | parts by mass | - | - | - | 1.2 | - | - | 1.2 | - | - | - | - | - | 1.2 | - |
| Curing catalyst | Neostann U-100 | parts by mass | 0.005 | 0005 | 0.005 | 0.005 | 0.005 | 0.005 | 0.005 | 0.005 | 0.005 | 0.005 | 0.005 | 0.005 | 0.005 | 0.005 |
| HSP values and interaction radius of siane-modffied organic polymer | δd1 | [J/cm3] 1/2 | 17.5 | 17.0 | 17.5 | 16.5 | 17.5 | 17.5 | 16.5 | 17.5 | 17.5 | 17.5 | 17.5 | 17.5 | 16.5 | 17.5 |
| | δp1 | | 27 | 3.0 | 27 | 9.0 | 2.7 | 27 | 9.0 | 2.7 | 27 | 2.7 | 2.7 | 27 | 9.0 | 2.7 |
| | δh1 | | 3.6 | 4.0 | 3.6 | 7.0 | 3.6 | 3.6 | 7.0 | 3.6 | 3.6 | 3.6 | 3.6 | 3.6 | 7.0 | 3.6 |
| | R0 | | 5.0 | 4.5 | 5.0 | 80 | 5.0 | 5.0 | 8.0 | 5.0 | 5.0 | 5.0 | 5.0 | 5.0 | 8.0 | 5.0 |

(continued)

| | | Unit | Ex. 1 | Ex. 2 | Ex. 3 | Ex. 4 | Ex.5 | Ex. 6 | Ex. 7 | Ex. 8 | Ex. 9 | Ex. 10 | Comp. Ex. 1 | Comp. Ex.2 | Comp . Ex 3 | Comp. Ex 4 |
|---|---|---|---|---|---|---|---|---|---|---|---|---|---|---|---|---|
| Alcohol | 2-Phenyl-2-propanol (δd2, δp2, δh2) = (17.9, 4.2, 8.4) | mass ppm | 100 | 100 | - | - | 25 | 5000 | - | - | - | - | - | - | - | - |
| | t-Butyl alcohol (δd2, δp2, δh2) = (15.2, 5.1, 14.7) | mass ppm | - | - | 100 | 100 | - | - | - | - | - | - | - | - | - | - |
| | (15.8, 8.8, 19.4) = | mass ppm | - | - | - | - | - | - | 100 | - | - | - | - | 100 | - | - |
| | 1-Undecand (δd2, δp2, δh2) = (16.1, 3.9, 9.9) | mass ppm | - | - | - | - | - | - | - | 100 | - | - | - | - | - | - |
| | 2,2-Dimethyl-1,3-δh2) = (15.6, 6.5, 13.5) | | - | - | - | - | - | - | - | - | 100 | - | - | - | - | - |
| | 3,3-Drnethyl-1,2-butanediol (δd2, δp2, δh2) = (16.0, 6.4, 113) | mass ppm | - | - | - | - | - | - | - | - | - | 100 | - | - | - | - |
| | Stearyl alcohol (δd2, δp2, 6h2) = (16.0, 2.6, 7.4) | mass ppm | - | - | - | - | - | - | - | - | - | - | 100 | - | 100 | - |

(continued)

| | Unit | Ex. 1 | Ex. 2 | Ex. 3 | Ex. 4 | Ex.5 | Ex. 6 | Ex. 7 | Ex. 8 | Ex. 9 | Ex. 10 | Comp. Ex. 1 | Comp. Ex.2 | Comp . Ex 3 | Comp. Ex 4 |
|---|---|---|---|---|---|---|---|---|---|---|---|---|---|---|---|
| Relative energy difference (RED) beween silane-modified organic polymer and alcohol | - | 1.02 | 1.09 | 245 | 1.13 | 1.02 | 10.9 | 1.56 | 1.40 | 225 | 1.81 | 0.97 | 3.45 | 0.81 | - |
| Curable resin composition | | B-1 | B-2 | B-3 | B-4 | B-5 | B-6 | B-7 | B-8 | B-9 | B-10 | B-11 | B-12 | B-13 | B-14 |
| Evaluation results of curable compostion | Storage stability | A | A | A | A | A | A | A | A | A | A | A | B | A | B |
| | Pot life properties | B | B | B | B | B | B | B | B | B | B | B | C | B | C |
| | Curability | A | A | A | A | A | A | A | A | A | A | B | A | B | A |
| | Adhesive strength (20°C) | A | A | A | A | A | A | A | A | A | A | B | A | B | A |
| | Adhesive strength (80°C) | A | A | A | A | A | A | A | A | A | A | B | A | B | A |
| | Thermal creep resistance (100°C) | A | A | A | A | A | A | A | A | A | A | B | A | B | A |
| | Thermal creep resistance (110°C) | A | A | A | B | A | B | A | A | A | A | B | A | B | A |

As shown in Table 2, it was revealed that the curable resin compositions obtained in Examples 1 to 10 had excellent storage stability, pot life properties, curability, adhesive strength (20°C and 80°C), and thermal creep resistance (100°C) . In particular, the curable resin compositions obtained in Examples 1 to 3, 5, and 7 to 10 showed similar results, in terms of curability, thermal creep resistance (100°C and 110°C), and adhesive strength (20°C and 80°C), to Comparative Example 4, in which no alcohol was added, revealing that they were far superior to Comparative Example 4 in terms of storage stability and pot life properties. That is, it was revealed that the curable resin compositions obtained in Examples 1 to 3, 5, and 7 to 10 were excellent in all of storage stability, pot life properties, curability, and adhesive strength at room temperature (20°C) and high temperature (80°C), as well as thermal creep resistance at 100°C and 110°C.

From the above points, the curable resin compositions of the present invention have excellent storage stability, pot life properties, curability, and adhesive strength at room temperature and high temperature, as well as sufficient thermal creep resistance, and thus can be suitably used as hot-melt adhesives.

Reference Signs List

1. Adherend 1
2. Curable resin composition
3. Adherend 2
4. Weight

## Claims

1. A curable resin composition comprising a silane-modified organic polymer, a curing catalyst, and an alcohol,

   wherein a relative energy difference (RED) between the silane-modified organic polymer and the alcohol, represented by the following mathematical formula, is 1.0 to 3.0:

$$\text{Relative energy difference (RED)} = \frac{R_{a-b}}{R_0}$$

   wherein $R_0$ represents an interaction radius of the silane-modified organic polymer, and Ra-b represents a distance between the Hansen solubility parameter (HSP) values of the silane-modified organic polymer and the Hansen solubility parameter (HSP) values of the alcohol.

2. The curable resin composition according to claim 1, wherein the alcohol is contained in an amount of 10 to 5000 mass ppm based on the mass of the silane-modified organic polymer.

3. The curable resin composition according to claim 1 or 2, wherein the alcohol is at least one member selected from the group consisting of ethanol, t-butyl alcohol, 3,3-dimethyl-1,2-butanediol, 1-undecanol, 2-phenyl-2-propanol, and 2,2-dimethyl-1,3-propanediol.

4. The curable resin composition according to any one of claims 1 to 3, wherein the silane-modified organic polymer is a silane-modified polyolefin-based polymer and/or a silane-modified polyoxyalkylene-based polymer.

5. A hot-melt adhesive comprising the curable resin composition according to any one of claims 1 to 4.

Fig. 1

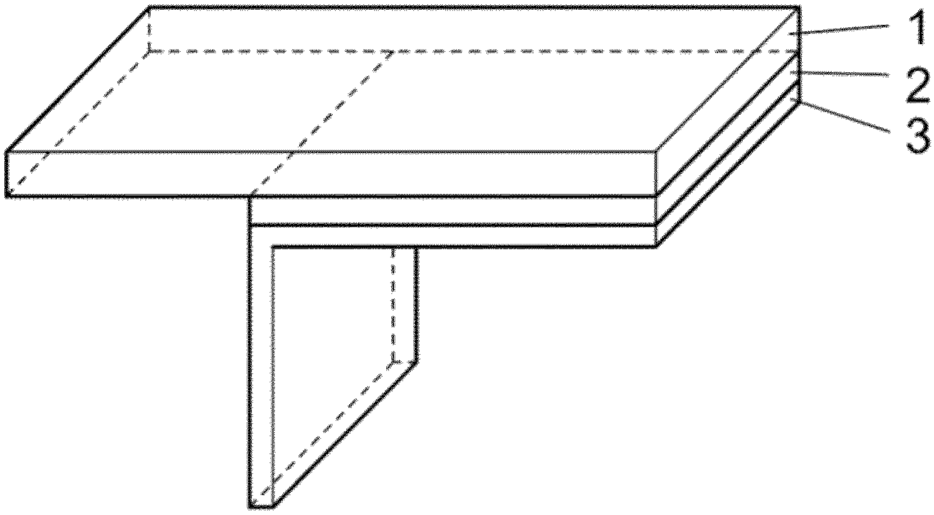


Fig. 2

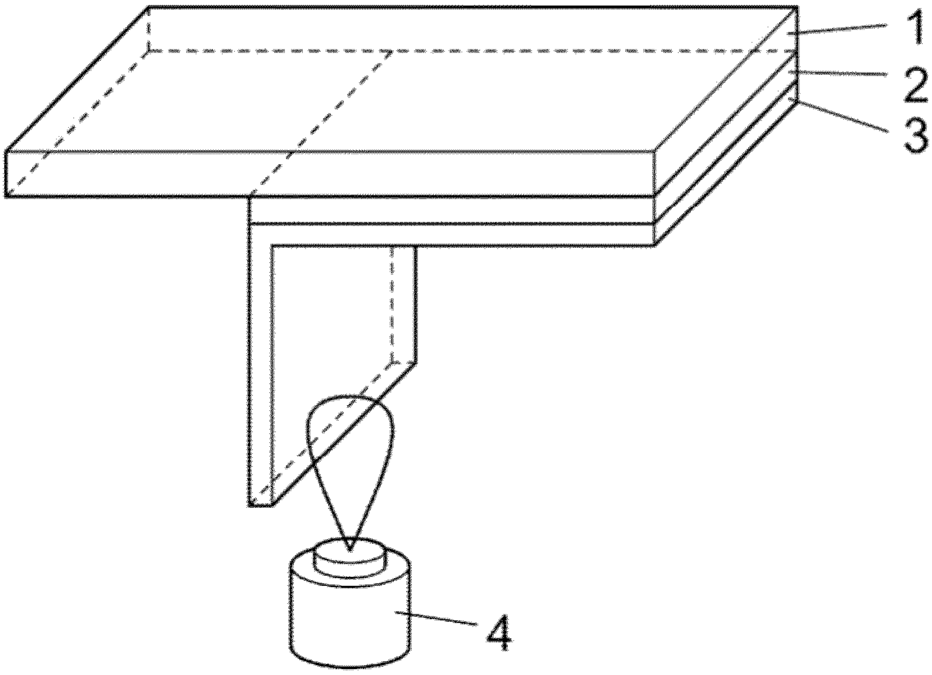

## INTERNATIONAL SEARCH REPORT

International application No.
**PCT/JP2022/035885**

**A. CLASSIFICATION OF SUBJECT MATTER**

***C08L 101/10***(2006.01)i; ***C08F 8/42***(2006.01)i; ***C08G 65/336***(2006.01)i; ***C09J 11/06***(2006.01)i; ***C09J 123/26***(2006.01)i
FI: C08L101/10; C08F8/42; C08G65/336; C09J123/26; C09J11/06

According to International Patent Classification (IPC) or to both national classification and IPC

**B. FIELDS SEARCHED**

Minimum documentation searched (classification system followed by classification symbols)

C08L101/10; C08F8/42; C08G65/336; C09J11/06; C09J123/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2017/047805 A1 (SEKISUI FULLER COMPANY, LTD.) 23 March 2017 (2017-03-23) | 1-5 |
| A | JP 2019-6971 A (SEKISUI FULLER COMPANY, LTD.) 17 January 2019 (2019-01-17) | 1-5 |
| A | JP 2020-158626 A (LINTEC CORP) 01 October 2020 (2020-10-01) | 1-5 |
| A | JP 2001-107018 A (SEKISUI CHEMICAL CO LTD) 17 April 2001 (2001-04-17) | 1-5 |
| A | JP 8-225738 A (SEKISUI CHEMICAL CO LTD) 03 September 1996 (1996-09-03) | 1-5 |
| A | JP 59-170168 A (KANEGAFUCHI KAGAKU KOGYO KK) 26 September 1984 (1984-09-26) | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2022/035885**

| Patent document cited in search report | Publication date (day/month/year) | Patent family member(s) | Publication date (day/month/year) |
|---|---|---|---|
| WO 2017/047805 A1 | 23 March 2017 | (Family: none) | |
| JP 2019-6971 A | 17 January 2019 | (Family: none) | |
| JP 2020-158626 A | 01 October 2020 | (Family: none) | |
| JP 2001-107018 A | 17 April 2001 | (Family: none) | |
| JP 8-225738 A | 03 September 1996 | (Family: none) | |
| JP 59-170168 A | 26 September 1984 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5851367 B
- JP 4150220 B
- JP 6152236 B
- JP S53134889 A
- JP 5064662 B
- JP S61215623 A
- JP S4627250 B
- JP S5915336 B
- US 3278457 A
- US 3278458 A
- US 3278459 A
- US 3427256 A
- US 3427334 A
- US 3427335 A
- JP H10273512 A
- JP H11060722 A
- JP 2017171708 A
- JP S4536319 B
- JP S4612154 B
- JP S50156599 A
- JP S546096 A
- JP S5513767 A
- JP S5513468 A
- JP S57164123 A
- JP H32450 B
- US 3632557 A
- US 4345053 A
- US 4366307 A
- US 4960844 A
- JP S61197631 A
- JP S61215622 A
- JP S61218632 A
- JP H372527 A
- JP H347825 A
- JP H8231707 A

### Non-patent literature cited in the description

- **HIROSHI YAMAMOTO ; S. ABBOTT ; C. M. HANSEN.** *Chemical Industry,* March 2010
- **HIROSHI YAMAMOTO ; S. ABBOTT ; C. M. HANSEN.** *Chemical Industry,* April 2010
- **S. ABBOTT ; C. M. HANSEN.** *Chemical Industry,* March 2010